# FASCICULE DE BREVET EUROPEEN

(11) **EP 2 594 469 B1**
(45) Date de publication et mention de la délivrance du brevet: **07.01.2015**
(21) Numéro de dépôt: 12192092.0
(22) Date de dépôt: 09.11.2012
(51) Int. Cl.: B62K 23/06, B62L 3/02

(54) **Système de freinage ayant une manette de freinage parallele à la poignée**
Bremssystem mit einem Bremshebel der parallel zu einem Handgriff ausgerichtet ist
Braking system having an operating lever extending in parallel to a hand grip

(30) Priorité: 21.11.2011 FR 1160585
(43) Date de publication de la demande: 22.05.2013
(73) Titulaire: DECATHLON, 59650 Villeneuve d'Ascq (FR)
(72) Inventeur: He, Yue, 59000 Lille (FR); Giovannetti, Sylvain, 62000 Arras (FR); Ridon, Ludovic, 59490 Somain (FR)
(74) Mandataire: Balesta, Pierre

(56) Documents cités:
- EP-A2- 0 035 372
- DE-A1- 3 139 861
- DE-U1- 9 211 708
- FR-A- 902 333
- FR-A1- 2 349 487
- JP-A- 2007 030 584
- US-A- 4 222 285
- US-A- 4 771 649
- US-A- 5 850 761

## Description

### Arrière-plan de l'invention

La présente invention a trait au domaine des véhicules, en particulier les véhicules à roues et notamment aux cycles, par exemple les vélos.

Elle concerne plus précisément un système de freinage d'un véhicule, en particulier un véhicule à roues, notamment pour un enfant, ayant au moins une poignée de préhension et au moins un frein actionnable par un câble de frein.

Dans les vélos d'enfant, par exemple ceux de taille 14 et 16 pouces, les freins avant et arrière demandent généralement un effort très important pour être actionnés. Les enfants, qui ont moins de force que les adultes, sont particulièrement touchés par cette problématique de difficulté de freinage. En outre, il arrive même que les enfants ayant de petites mains n'arrivent pas à toucher les leviers de frein. C'est pour cette raison que l'on observe souvent les enfants freiner en frottant les pieds par terre. Bien évidemment, cela peut engendrer des risques pour la sécurité de l'enfance.

Les freins actuels qui équipent les vélos pour enfants ont été conçus avec un levier divergent plus petit par rapport au levier adulte mais il ne demande pas moins de force pour être actionné. Document JP2007030584 divulgue un système de freinage selon le préambule de la revendication 1.

### Objet et résumé de l'invention

Un objet de la présente invention est de proposer un système de freinage pour un véhicule ayant un guidon muni d'au moins une poignée de préhension, et notamment pour un vélo enfant, ce système de freinage pouvant être actionné sans exercer un effort important.

L'invention atteint son but par le fait que le système de freinage selon l'invention comporte :
- un support présentant une première partie destinée à être fixée au guidon et une deuxième partie munie d'un organe de guidage du câble de frein ;
- un corps pivotant monté pivotant par rapport au support autour d'un axe de pivotement sensiblement parallèle à la poignée de préhension ; le corps pivotant comprenant :
   ∘ une manette de freinage faisant saillie, selon une direction sensiblement parallèle à un axe longitudinal de la poignée de préhension, depuis une première extrémité du corps pivotant opposée à l'axe de pivotement ;
   ∘ une zone d'attache pour une extrémité du câble de frein, la distance entre l'axe de pivotement et ladite zone d'attache étant inférieure à la distance entre l'axe de pivotement et ladite première extrémité du corps opposée à l'axe de pivotement.

On comprend que lorsque la manette de freinage est actionnée, le corps pivotant pivote autour de l'axe d'actionnement, ce qui a pour effet de modifier la position de la zone d'attache. Il s'ensuit qu'une force est appliquée sur le câble de freinage, ce qui conduit au freinage du véhicule.

De préférence, la zone d'attache est située entre l'axe de pivotement et la manette de freinage, et plus généralement à l'intérieur d'un disque centré sur l'axe de pivotement et ayant pour rayon la distance entre l'axe de pivotement et la manette de freinage.

De préférence, l'axe de pivotement est disposé entre les première et seconde parties du support.

Selon l'invention, la manette de freinage est disposée parallèlement à l'axe longitudinal de la poignée de préhension de sorte que la distance entre la manette et la poignée est sensiblement la même sur toute la longueur de la manette, alors que dans les systèmes de freinage antérieurs, le levier de freinage est divergent, c'est-à-dire que, considérée selon la direction longitudinale de la poignée, la distance entre le levier et la poignée augmente lorsque l'on s'éloigne de l'axe de pivotement du levier.

Les inventeurs ont constaté que les enfants ayant de petites mains ne parviennent pas à saisir le levier antérieur sur toute sa longueur avec leurs quatre doigts fonctionnels lorsque ces derniers souhaitent freiner durant la phase de pédalage. Au contraire, grâce à l'invention, l'enfant peut saisir la manette de freinage avec ses quatre doigts fonctionnels.

Grâce à l'invention, la force que chaque doigt applique sur le levier est multipliée par le même ratio durant tout le mouvement de pivotement de la manette.

Pour ce faire, de manière avantageuse, le ratio entre :
- la distance entre l'axe de pivotement et la manette de freinage; et
- la distance entre l'axe de pivotement et la zone d'attache,
est constant sur toute l'amplitude du mouvement de la manette de freinage, ces distances étant considérées dans un plan orthogonal à l'axe de pivotement.

Considérée dans ce plan orthogonal à l'axe de pivotement, la distance entre l'axe de pivotement et la zone d'attache est de préférence, mais pas exclusivement, approximativement égale à la moitié de la distance entre l'axe de pivotement et la manette.

Le ratio entre la force exercée sur le câble de frein et la force exercée sur la manette de freinage est donc de préférence sensiblement égal à 2, et ce sur toute l'amplitude du mouvement de la manette de freinage.

De préférence, la manette est bombée de manière à épouser la forme de la main, ce qui donne une meilleure préhension et maximise la zone de contact avec les doigts par rapport aux leviers existants.

De préférence, mais pas nécessairement, l'organe de guidage s'étend selon un axe orthogonal à l'axe de pivotement du corps pivotant.

Avantageusement, le support présente une portion coudée située entre la première et la deuxième partie du support, et l'axe de pivotement traverse ladite portion coudée. De préférence, la portion coudée est agencée de manière que l'axe de pivotement soit situé au-dessus des premières phalanges de la main de l'enfant.

Un intérêt est d'améliorer l'ergonomie du système de freinage car la trajectoire de la manette de freinage correspond au mouvement naturel des doigts lors du freinage, et notamment le mouvement des troisièmes phalanges.

De manière particulièrement avantageuse, l'organe de guidage du câble de frein s'étend selon un axe qui passe dans le volume défini par la première partie du support. Ainsi, lors de l'actionnement du système de freinage, c'est-à-dire lors du pivotement du corps pivotant, le câble de frein est tiré selon une direction axiale qui passe dans le volume intérieur défini par la poignée de préhension. Autrement dit, le câble est tiré vers la paume de la main, dans le sens naturel de fermeture de la main. Par suite, la force de traction transmise au câble de freinage lors du repliement des doigts est maximisée. L'opération de freinage est donc facilitée.

De préférence, la zone d'attache est disposée approximativement dans la continuité de l'axe de l'organe de guidage, de manière à s'assurer que le déplacement du câble de freinage est réalisé selon l'axe de l'organe de guidage.

L'organe de guidage pourra comporter une molette de réglage afin de régler la tension du câble de freinage.

De préférence, l'organe de guidage et la première partie du support sont disposés de part et d'autre d'un plan contenant l'axe de pivotement et passant par la zone d'attache.

Avantageusement, le système de freinage présente une position de repos dans laquelle le corps pivotant est disposé à proximité de l'organe de guidage, et une position actionnée dans laquelle le corps pivotant est pivoté de manière à être amené vers la poignée.

De préférence, le corps pivotant présente un logement pour recevoir la deuxième partie du support lorsque ledit système de freinage est en position de repos. Le corps pivotant comprend de préférence deux ailes qui flanquent la partie du support s'étendant entre la portion coudée et la deuxième partie du support.

En position de repos et en position actionnée, l'angle défini entre un premier plan passant par la zone d'attache et contenant l'axe de pivotement, et un deuxième plan contenant l'axe de pivotement et l'axe longitudinal de la poignée est préférentiellement inférieur à 90°, de préférence inférieur à 70°. Un intérêt est de minimiser l'amplitude angulaire de la manette de freinage.

Il s'ensuit que la zone d'attache est disposée entre l'axe de pivotement et l'axe longitudinal de la poignée de préhension lorsque le système de freinage est fixé au guidon.

Pour permettre le retour de la manette de freinage en position de repos lorsque la manette n'est pas actionnée, le système de freinage comporte en outre un ressort de rappel monté entre le support et le corps pivotant. Le ressort est par exemple un ressort de torsion.

Selon un mode de réalisation préféré, mais non limitatif, la première partie du support comporte un manchon de fixation destiné à être fixé au guidon du véhicule. Ce manchon présente une forme générale cylindrique dont l'axe longitudinal est parallèle à l'axe de pivotement. Ce manchon est destiné à venir enserrer un tube du guidon du véhicule.

Afin d'améliorer la prise en main du système de freinage, la manette de freinage est bombée et s'étend sur toute la longueur de la poignée de préhension. La partie bombée s'étend dans une direction opposée à la poignée de préhension. Un intérêt est que la manette de freinage épouse la main de l'enfant, grâce à quoi l'enfant peut saisir la manette de freinage avec ses quatre doigts fonctionnels.

L'invention porte également sur un véhicule à roues ayant au moins une roue fixée à un cadre comprenant une poignée de préhension et au moins un frein associé à ladite roue et actionnable par un câble de frein, ledit véhicule comportant en outre un système de freinage selon l'invention.

De préférence, l'axe de pivotement est sensiblement perpendiculaire ou légèrement incliné par rapport au plan de la roue. Par suite, l'axe de pivotement est sensiblement perpendiculaire à la direction d'avancée du véhicule.

Encore de préférence, lorsque le véhicule est placé sur un plan horizontal, l'axe de pivotement est disposé au-dessus d'un plan horizontal passant par l'axe longitudinal de la poignée de préhension.

### Brève description des dessins

L'invention sera mieux comprise à la lecture de la description qui suit d'un mode de réalisation de l'invention donné à titre d'exemple non limitatif, en référence aux dessins annexés, sur lesquels :
- la figure **1** est une vue en perspective du système de freinage selon un premier mode de réalisation de l'invention, en position de repos ;
- la figure **2** est une vue en coupe du système de freinage de la figure **1****,** prise selon un plan perpendiculaire à l'axe de pivotement de la manette de freinage, le système de freinage étant en position de repos ;
- la figure **3** illustre le système de freinage de la figure **2** en position actionnée ;
- la figure **4** est une vue de côté d'un véhicule à roues comportant un système de freinage selon l'invention ;
- la figure **5** est une vue en perspective du deuxième mode de réalisation du système de freinage selon l'invention ;
- la figure **6** est une vue en coupe du système de freinage de la figure **5****,** prise selon un plan perpendiculaire à l'axe de pivotement de la manette de freinage, le système de freinage étant en position de repos ; et
- la figure **7** illustre le système de freinage de la figure **6** en position actionnée.

### Description détaillée de l'invention

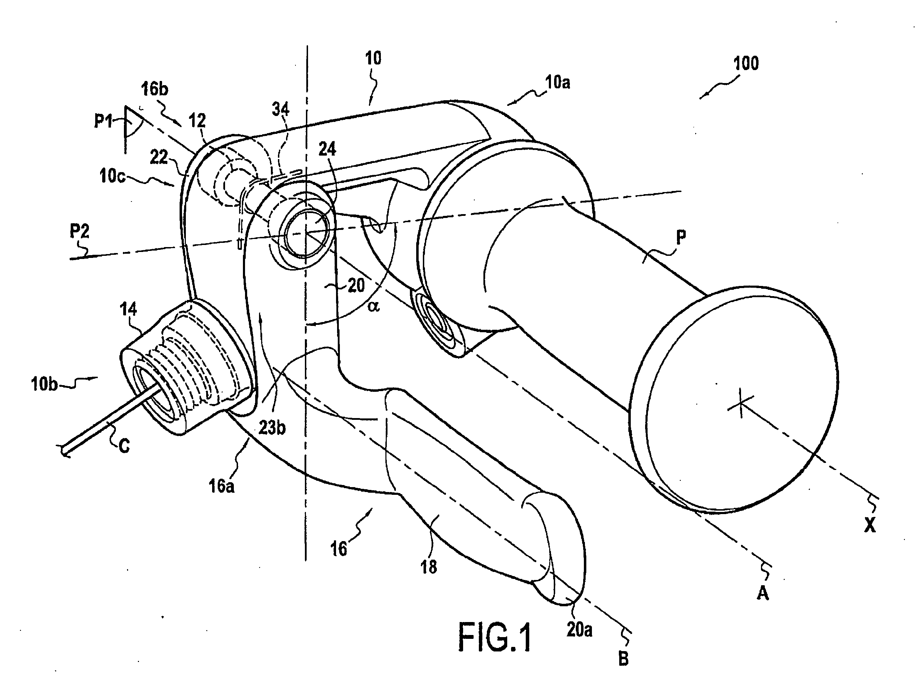

A l'aide des figures **1** à **4****,** on va maintenant décrire un premier mode de réalisation du système de freinage **100** selon l'invention. Ce système de freinage **100** est destiné à être monté sur un véhicule à roues **200,** telle une bicyclette, qui comporte un guidon muni d'au moins une poignée de préhension et au moins un frein actionnable par un câble de frein **C.** De manière connue, le frein est destiné à freiner l'une des roues du véhicule. Dans cet exemple, le système de freinage est fixé à un tube du guidon du véhicule, auquel est également fixée la poignée de préhension **P.**

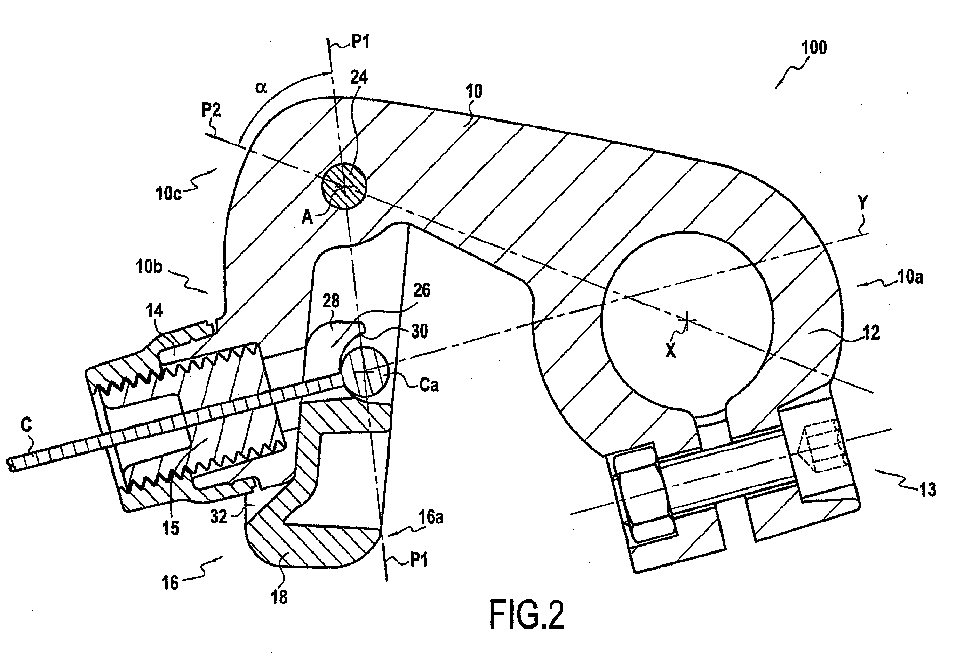

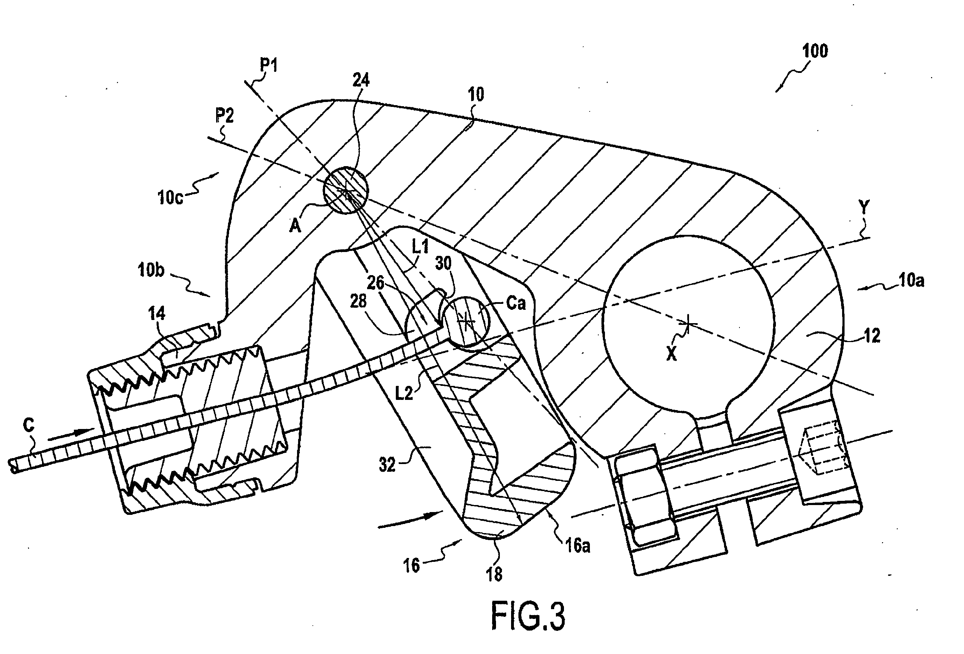

Le système de freinage **100** comporte un support **10** qui présente une première partie **10a** destinée à être fixée à la poignée de préhension **P**. Dans cet exemple, la première partie **10a** comporte un manchon **12** de fixation qui est destiné à être fixé au guidon du véhicule **200.** Comme on le constate sur les figures **2** et **3****,** ce manchon **12** est fendu et comprend un moyen de serrage **13.** Le manchon présente la forme générale d'un cylindre qui s'étend selon une direction axiale référencée **X.** Le manchon **12** est destiné à enserrer le tube du guidon du véhicule, étant souligné que la poignée de préhension est également montée sur ce tube de guidon. On comprend donc que la direction axiale **X** du manchon **12** et l'axe longitudinal de la poignée de préhension **P** sont coaxiaux. Sans sortir du cadre de la présente invention, le support **10** pourrait être formé en une seule pièce avec le tube du guidon, ou bien encore avec la poignée de préhension **P**. Quoi qu'il en soit, la première partie **10a** du support **10** est fixée au guidon.

Le support **10** comprend en outre une deuxième partie **10b**, opposée à la première partie **10a,** cette deuxième partie **10b** étant munie d'un organe de guidage **14** du câble de frein **C.**

Dans cet exemple, le support **10** présente en outre une portion coudée **10c** qui est située entre les première et deuxième parties. Comme on peut le constater sur la figure **2****,** la portion coudée forme approximativement un angle droit. L'organe de guidage **14** présente quant à lui une forme sensiblement cylindrique s'étendant selon une direction longitudinale **Y** qui est orthogonale à l'axe longitudinal **X** du manchon **12.** L'organe de guidage **14** est ici muni d'un guide câbles **15.** Dans cet exemple, l'organe de guidage **14** est orthogonal à l'axe de pivotement **A.**

Conformément à l'invention, le système de freinage **100** comporte en outre un corps pivotant **16** qui est monté pivotant par rapport au support **10** autour d'un axe de pivotement **A.** Comme on le constate sur la figure **1****,** l'axe de pivotement **A** est sensiblement parallèle à l'axe longitudinal **X** de la poignée de préhension **P.** Cet axe de pivotement **A** est disposé dans la portion coudée **10**c entre les première et deuxième parties du support **10.** L'axe de pivotement **A** traverse la portion coudée **10**c.

Le corps pivotant **16** comprend une manette de freinage **18** qui fait saillie selon une direction sensiblement parallèle à l'axe longitudinal **X** de la poignée de préhension **P**, depuis une première extrémité **16**a du corps pivotant **16.** Autrement dit, la manette de freinage **18** s'étend perpendiculairement au corps pivotant **16** depuis sa première extrémité **16**a. On appelle **B** la direction longitudinale selon laquelle s'étend la manette de freinage **18.**

Cette première extrémité **16**a du corps pivotant **16** est disposée à l'opposé d'une seconde extrémité **16**b qui est montée en liaison pivot avec le support **10.** A cet effet, la seconde extrémité du corps pivotant **16** comprend une paire d'ailes **20, 22** qui sont disposées de part et d'autre de la largeur de la portion coudée **10c** du support **10**.

Les deux ailes **20, 22** entourent la partie du support **10** qui s'étend entre la portion coudée **10**c et la deuxième partie **10**b. Les extrémités des deux ailes **20, 22** présentent chacune un orifice recevant un arbre **24** qui traverse la portion coudée **10**c du support **10** afin de réaliser la liaison pivot entre le corps pivotant **16** et le support **10.**

Ainsi, la manette de freinage **18** s'étend sensiblement parallèlement à la poignée de préhension **P,** selon sensiblement toute la longueur de cette dernière. En outre, on remarque que la manette de freinage **18** est bombée, ce qui permet de faciliter sa préhension.

Compte tenu de ce qui précède, on comprend que l'axe de pivotement **A,** l'axe longitudinal de la poignée de préhension **P** et la direction longitudinale **B** de la manette de freinage sont parallèles.

En se référant maintenant à la figure **2****,** on constate que le corps pivotant **16** comprend une zone d'attache **26** pour une extrémité **Ca** du câble de frein **C.** Dans cet exemple, l'extrémité **Ca** du câble **C** présente la forme d'une sphère dont le diamètre est très supérieur à celui du câble du frein **C.** La zone d'attache comprend une gorge formée entre deux pattes **28,** l'épaisseur de cette gorge étant sensiblement égale ou très légèrement supérieure au diamètre du câble **C** mais très inférieure au diamètre de l'extrémité **Ca** du câble. Les surfaces des pattes **28** qui sont orientées face au manchon **12** forment une surface d'appui **30** pour l'extrémité sphérique **Ca** du câble de frein **C** tandis que le câble de frein **C** s'étend dans la gorge formée entre les deux pattes **28.**

Comme on le constate sur les figures **2** et **3****,** la surface d'appui **30** est courbe tout en entourant partiellement l'extrémité sphérique **Ca** du câble de frein **C** de manière à retenir et accompagner l'extrémité **Ca** du câble lors de l'actionnement de la manette de freinage.

Lorsque l'on actionne la manette de freinage, c'est-à-dire lorsque l'on fait passer le système de freinage de la position de repos représentée sur la figure **2** à une position actionnée représentée sur la figure **3****,** le corps pivotant **16** pivote autour de l'axe de pivotement **A,** ce qui implique le déplacement de la zone d'attache **26** en rotation autour de l'axe de pivotement **A,** à la suite de quoi l'extrémité **Ca** du câble de frein est tirée selon une direction sensiblement parallèle à la direction longitudinale **Y** de l'organe de guidage **14.** Cette action de traction du câble de frein **C** est réalisée vers la poignée de préhension, c'est-à-dire vers l'intérieur de la main de l'utilisateur. Ce mouvement avantageux permet d'optimiser la force exercée sur le câble de frein **C,** et donc sur le frein.

En position de repos, on constate que la zone d'attache **26** est disposée dans la continuité de l'axe **Y** de l'organe de guidage **14.**

Selon l'invention, cette zone d'attache **26** est disposée entre la seconde extrémité **16b** contenant l'axe de pivotement **A** et la première extrémité **16a** du corps pivotant **16** opposée à l'axe de pivotement **A,** considérée dans un plan perpendiculaire à l'axe de pivotement. Plus précisément, la zone d'attache **26** est située entre l'axe de pivotement **A** et la manette de freinage **18.** En d'autres termes, dans le volume défini entre les première et seconde extrémités **16a, 16b,** la distance **L1** entre l'axe de pivotement **A** et la zone d'attache **26** est inférieure à la distance **L2** entre l'axe de pivotement **A** et la première extrémité **16**a du corps pivotant **16**.

Dans cet exemple non limitatif, la zone d'attache est disposée à environ mi-distance entre l'axe de pivotement **A** et la première extrémité **16**a du corps pivotant **16** d'où s'étend la manette de freinage. Plus précisément, la zone d'attache est agencée de sorte que l'extrémité **Ca** du câble **C** soit positionnée à mi-distance entre l'axe de pivotement **A** et la première extrémité **16**a du corps pivotant **16.** Comme mentionné ci-dessus, ce ratio est sensiblement constant sur toute l'amplitude du mouvement de rotation de la manette de freinage. En outre, ce rapport de longueur, qui est donné à titre d'exemple non limitatif, permet d'obtenir un ratio sensiblement égal à deux entre la force exercée sur le câble de frein et la force exercée sur la manette de freinage.

Comme on le constate sur les figures **2** et **3****,** le câble de freinage **C** s'étend dans l'organe de guidage **14** selon la direction longitudinale **Y** de cet organe de guidage. Plus précisément, on remarque que la direction longitudinale **Y** selon laquelle s'étend le câble de frein passe dans le volume défini par la poignée de préhension **P,** ainsi que dans le volume défini par le manchon **12.** Comme la paume de l'utilisateur entoure la poignée de préhension, on comprend que l'actionnement de la manette de freinage (réalisée par le repliement des doigts) tend à amener le câble de frein vers l'intérieur de la paume. Par suite, le câble de frein est tiré selon la direction naturelle de fermeture de la main, ce qui permet de maximiser la force de traction appliquée sur le câble de frein **C.** Selon une autre variante, la direction longitudinale **Y** pourrait passer en dessous de la poignée de préhension.

Si l'on considère maintenant l'angle α formé entre un premier plan **P1** passant par la zone d'attache et contenant l'axe de pivotement **A,** et un deuxième plan **P2** contenant l'axe de pivotement **A** et l'axe longitudinal **X** de la poignée de préhension, on constate que la valeur de cet angle, en position de repos et en position actionnée, est inférieure à 90° et de préférence inférieure à 70°. Autrement dit, l'angle α est toujours un angle aigu.

En se référant à nouveau à la figure **2****,** on remarque que l'organe de guidage **14** et la première partie **10**a du support **10** sont disposés de part et d'autre du plan **P1** qui contient l'axe de pivotement **A** et qui passe par la zone d'attache **26.** Plus précisément, le plan **P1** est de préférence le plan qui contient l'axe de pivotement **A** et qui passe par l'extrémité **Ca** du câble de frein **C.**

Lorsque le système de freinage **100** est en position de repos, la deuxième partie 10b du support est reçue dans un logement **32** ménagé au dos du corps pivotant **16.**

Par ailleurs, pour permettre le passage de la position actionnée vers la position de repos, le système de freinage **100** comporte un ressort de rappel **34** qui est monté entre le support **10** et le corps pivotant **16.**

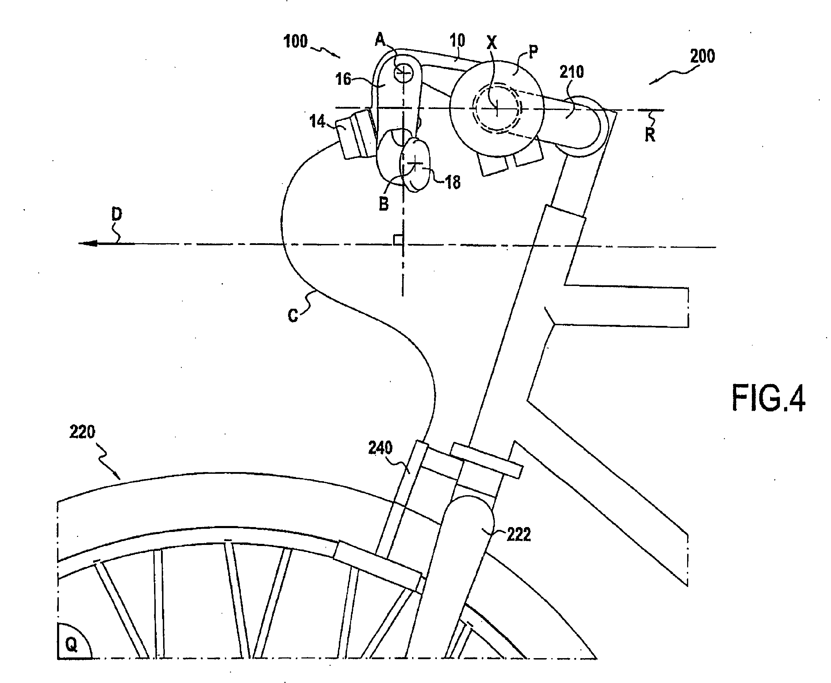

Sur la figure **4****,** on a représenté la partie avant d'un véhicule à roues, en l'espèce une bicyclette **200** qui comporte le système de freinage **100** selon l'invention. Le système de freinage **100** est monté sur un tube du guidon **210** du véhicule **200.** Ce dernier comporte en outre au moins une roue **220** fixée à un cadre **222** et un frein **240** qui est associé à ladite roue pour la freiner et qui est relié au système de freinage **100** par l'intermédiaire d'un câble de frein **C.** Comme on le constate sur cette figure **4****,** l'axe de pivotement **A** est orthogonal à un plan **Q** dans lequel s'étend la roue **220.** Dans cet exemple, l'axe de pivotement **A** est également orthogonal à la direction d'avancée du véhicule **200.** Préférentiellement, le corps pivotant **16** s'étend selon une direction qui est sensiblement perpendiculaire à la direction d'avancée **D.**

Toujours dans cet exemple, on constate que l'axe de pivotement **A** est disposé au-dessus d'un plan horizontal **R** qui passe par l'axe longitudinal **X** de la poignée de préhension **P.**

De préférence, l'axe longitudinal **Y** de l'organe de guidage **12** est incliné par rapport au plan **R** de sorte que l'axe longitudinal **Y** est approximativement parallèle à la direction des avant-bras de l'utilisateur. Un intérêt est là-encore d'optimiser la force appliquée à la manette de freinage.

Compte tenu de ce qui précède, on comprend que le système de freinage **100** selon l'invention permet à un enfant d'actionner aisément la manette de freinage en utilisant ses quatre doigts fonctionnels, et ce afin d'obtenir un freinage du véhicule sans efforts excessifs.

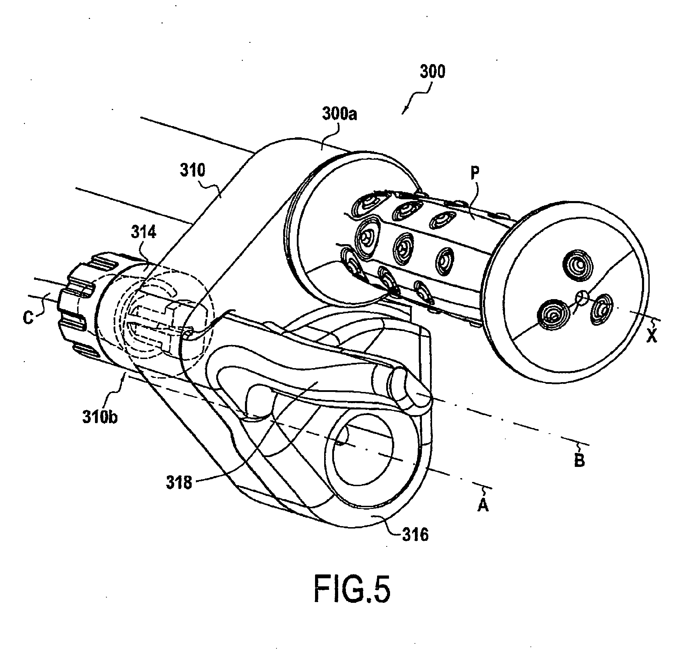

Sur les figures **5** à **7****,** on a représenté un deuxième mode de réalisation du système de freinage **300** selon l'invention. Ce système de freinage est également destiné à être monté sur le véhicule **200** décrit précédemment.

Ce système de freinage **300** comporte un support **310** qui présente une première partie **310**a destinée à être fixée au guidon du véhicule par l'intermédiaire d'un manchon **312**, et une seconde partie **310**b munie d'un organe de guidage **314** du câble de frein **C.** Dans ce deuxième mode de réalisation, l'organe de guidage **314** du câble de frein présente une portion qui s'étend selon une direction parallèle au guidon, perpendiculairement par rapport au support **310.**

Le système de freinage comporte en outre un corps pivotant **316** monté par rapport au support autour d'un axe de pivotement **A** qui est sensiblement parallèle au guidon et à la poignée de préhension **P.**

Cet axe de pivotement **A** est disposé dans un plan qui s'étend entre la première **310**a et la deuxième **310**b partie du support **310**.

Le corps pivotant **316** comprend une manette de freinage **318** faisant saillie, selon une direction **B** sensiblement parallèle à un axe longitudinal **X** de la poignée de préhension, depuis une première extrémité **316**a du corps pivotant opposée à l'axe de pivotement **A.** En d'autres termes, la manette de freinage **318** reste parallèle à la poignée de préhension **P** lors de son actionnement.

Le corps pivotant comporte en outre une zone d'attache **326** pour une extrémité **Ca** du câble de frein **C.** Conformément à l'invention, la distance **L1** entre l'axe de pivotement et la zone d'attache est inférieure à la distance **L2** entre l'axe de pivotement **A** et la première extrémité du corps opposée à l'axe de pivotement.

Par rapport au premier mode de réalisation, la zone d'attache **326** du système de freinage du deuxième mode de réalisation est située à distance du plan contenant l'axe de pivotement **A** et l'axe **B** selon lequel s'étend la manette **318.** Plus précisément, la zone d'attache **326** est située sensiblement entre l'axe de pivotement **A** et l'axe **X** du manchon de fixation au guidon.

Le câble de frein **C** passe à travers l'organe de guidage **312** puis dans une gouttière **350** ménagée dans le support **310** de façon à courber le câble. Celui-ci traverse ensuite le corps pivotant pour venir se loger dans la zone d'attache **326.**

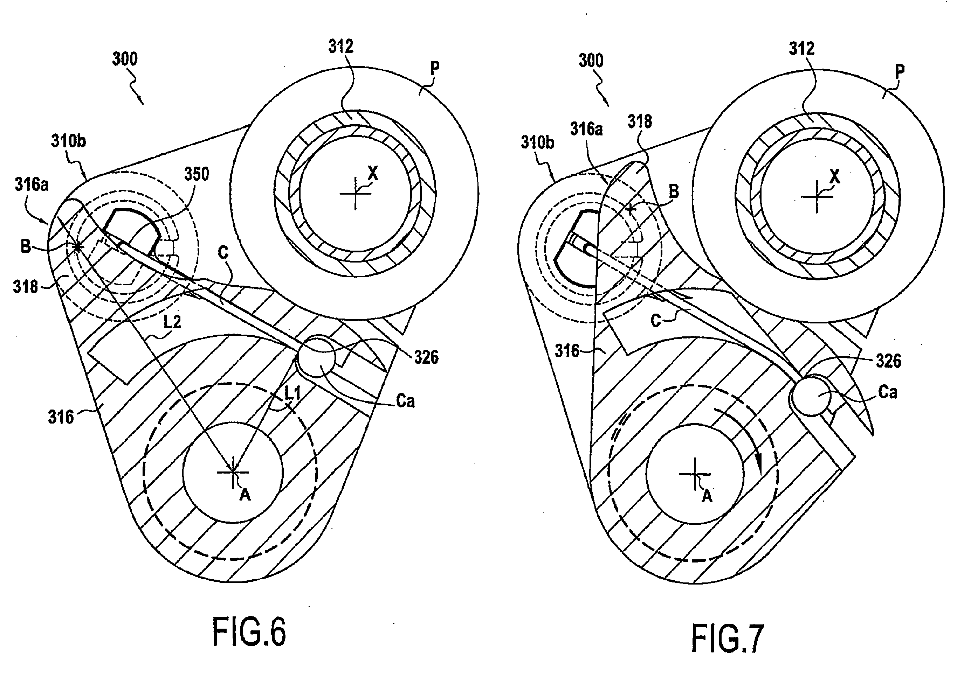

Sur la figure **6** on a représenté le système de freinage **300** en position de repos, tandis que sur la figure **7** on a représenté le même système en position actionnée, le corps pivotant ayant pivoté d'environ 20° autour de l'axe de pivotement **A.** On comprend donc que la rotation du corps pivotant **316** entraîne le déplacement du câble de frein **C** et le freinage du véhicule.

Par ailleurs, à l'instar du premier mode de réalisation, le ratio entre :
- la distance **L2** entre l'axe de pivotement **A** et la manette de freinage **318**; et
- la distance **L1** entre l'axe de pivotement **A** et la zone d'attache **326** du câble de frein,
est constant sur toute l'amplitude du mouvement de la manette de freinage **318.**

Ainsi, le deuxième mode de réalisation du système de freinage **300** selon l'invention permet également à un enfant de pouvoir actionner aisément la manette de freinage **318** en utilisant ses quatre doigts fonctionnels, et ce afin d'obtenir un freinage du véhicule sans efforts excessifs.

## Revendications

1. Système de freinage (100) d'un véhicule (200) ayant un guidon muni d'au moins une poignée de préhension (P) ayant un axe longitudinal (X), et au moins un frein (240) actionnable par un câble de frein (C), ledit système de freinage comportant :
• un support (10) présentant une première partie (10a) destinée à être fixée au guidon et une seconde partie (10b) munie d'un organe de guidage (14) du câble de frein ;
• un corps pivotant (16) monté pivotant par rapport au support autour d'un axe de pivotement (A) qui est sensiblement parallèle à l'axe longitudinal (X) de la poignée de préhension (P) lorsque le système de freinage est fixé au guidon ; le corps pivotant comprenant :
∘ une manette de freinage (18) faisant saillie, selon une direction (B) sensiblement parallèle à l'axe de pivotement (A), depuis une première extrémité (16a) du corps pivotant opposée à l'axe de pivotement ; et
∘ une zone d'attache (26) pour une extrémité (Ca) du câble de frein (C) ;
ledit système de freinage étant **caractérisé en ce que** :
• considérée dans un plan perpendiculaire à l'axe de pivotement (A), ladite zone d'attache est disposée entre l'axe de pivotement (A) et ladite première extrémité du corps opposée à l'axe de pivotement ; et **en ce que**
• l'organe de guidage (14) du câble de frein s'étend selon un axe (Y) qui passe dans le volume défini par la première partie du support destinée à être fixée au guidon.

2. Système de freinage selon la revendication **1**, **caractérisé en ce que** le support (10) présente une portion coudée (10c) située entre la première et la deuxième partie du support et **en ce que** l'axe de pivotement (A) traverse ladite portion coudée.

3. Système de freinage selon l'une quelconque des revendications **1** ou **2, caractérisé en ce que** la zone d'attache (26) est disposée approximativement dans la continuité de l'axe de l'organe de guidage.

4. Système de freinage selon l'une quelconque des revendications **1 à 3, caractérisé en ce que** l'organe de guidage (14) et la première partie (10a) du support sont disposés de part et d'autre d'un plan (P1) contenant l'axe de pivotement (A) et passant par la zone d'attache (26).

5. Système de freinage selon l'une quelconque des revendications **1 à 4, caractérisé en ce qu'il** présente une position de repos dans laquelle le corps pivotant (16) est disposé à proximité de l'organe de guidage, et une position actionnée dans laquelle le corps pivotant est pivoté de manière à être amené vers la première partie du support (10).

6. Système de freinage selon la revendication **5**, **caractérisé en ce que** le corps pivotant (16) présente un logement (32) pour recevoir la seconde partie (10b) du support (10) lorsque ledit système de freinage est en position de repos.

7. Système de freinage selon la revendication **5** ou **6**, **caractérisé en ce que,** en position de repos, l'angle (α) défini entre un premier plan (P1) passant par la zone d'attache et contenant l'axe de pivotement, et un deuxième plan (P2) contenant l'axe de pivotement (A) et l'axe longitudinal (X) de la poignée de préhension, est inférieur à 90°, de préférence inférieur à 70°.

8. Système de freinage selon l'une quelconque des revendications **5 à 7, caractérisé en ce qu'il** comporte en outre un ressort de rappel (34) monté entre le support et le corps pivotant et agencé de manière à ramener le système de freinage en position de repos lorsque la manette n'est pas actionnée.

9. Système de freinage selon l'une quelconque des revendications **1 à 8, caractérisé en ce que** la première partie (10a) du support comporte un manchon de fixation (12) destiné à être fixé au guidon du véhicule.

10. Système de freinage selon la revendication **9**, **caractérisé en ce que** l'axe selon lequel s'étend l'organe de guidage passe dans le volume défini par le manchon de fixation (12).

11. Système de freinage selon l'une quelconque des revendications **1 à 10, caractérisé en ce que** la manette de freinage (18) est bombée et est configurée pour s'étendre sur toute la longueur de la poignée de préhension (P).

12. Système de freinage selon l'une quelconque des revendications **1 à 11, caractérisé en ce que** le ratio entre :
• la distance (L2) entre l'axe de pivotement et la manette de freinage (18), considérée dans un plan perpendiculaire à l'axe de pivotement (A) ; et
• la distance (L1) entre l'axe de pivotement (A) et la zone d'attache, considérée dans ledit plan perpendiculaire à l'axe de pivotement (A),
est constant sur toute l'amplitude du mouvement de la manette de freinage.

13. Véhicule à roues (200) ayant au moins une roue (220) fixée à un cadre comprenant une poignée de préhension (P) et au moins un frein (240) associé à ladite roue et actionnable par un câble de frein, ledit véhicule comportant en outre un système de freinage (100) selon l'une quelconque des revendications **1 à 12**.

14. Véhicule selon la revendication **13, caractérisé en ce que** l'axe de pivotement (A) est sensiblement perpendiculaire ou légèrement incliné par rapport au plan (Q) de la roue.

15. Véhicule selon la revendication **13** ou **14**, **caractérisé en ce que** l'axe de pivotement (A) est disposé au-dessus d'un plan horizontal (R) contenant l'axe longitudinal (X) de la poignée de préhension.

16. Véhicule selon l'une quelconque des revendications **13 à 15**, **caractérisé en ce que** l'axe (Y) selon lequel s'étend l'organe de guidage passe dans le volume défini par la poignée de préhension.

## Patentansprüche

1. Bremssystem (100) eines Fahrzeugs (200) mit einer Lenkstange, die mit wenigstens einem Griff (P), welcher eine Längsachse (X) aufweist, versehen ist, sowie wenigstens einer Bremse (240), die über ein Bremsseil (C) betätigbar ist, wobei das Bremssystem umfasst:
• einen Träger (10), der einen ersten Teil (10a), welcher dazu bestimmt ist, an der Lenkstange befestigt zu werden, und einen zweiten Teil (10b), welcher mit einem Organ zum Führen (14) des Bremsseils versehen ist, aufweist;
• einen Schwenkkörper (16), der gegenüber dem Träger um eine Schwenkachse (A), welche zu der Längsachse (X) des Griffes (P) im Wesentlichen parallel verläuft, wenn das Bremssystem an der Lenkstange befestigt ist, verschwenkbar angebracht ist; wobei der Schwenkkörper umfasst:
∘ einen Bremsbetätigungshebel (18), der in einer Richtung (B) im Wesentlichen parallel zu der Schwenkachse (A) von einem von der Schwenkachse abgewandten ersten Ende (16a) des Schwenkkörpers vorspringt; und
∘ einen Befestigungsbereich (26) für ein Ende (Ca) des Bremsseils (C);
wobei das Bremssystem **dadurch gekennzeichnet ist, dass**:
• in einer Ebene senkrecht zu der Schwenkachse (A) betrachtet, der Befestigungsbereich zwischen der Schwenkachse (A) und dem von der Schwenkachse abgewandten ersten Ende des Körpers angeordnet ist; und dass
• das Organ zum Führen (14) des Bremsseils sich entlang einer Achse (Y) erstreckt, die in den Raum verläuft, der durch den ersten Teil des Trägers, welcher dazu bestimmt ist, an der Lenkstange befestigt zu werden, definiert ist.

2. Bremssystem nach Anspruch 1, **dadurch gekennzeichnet, dass** der Träger (10) einen gebogenen Abschnitt (10c), welcher zwischen dem ersten und dem zweiten Teil des Trägers gelegen ist, aufweist und dass die Schwenkachse (A) den gebogenen Abschnitt durchquert.

3. Bremssystem nach einem der Ansprüche 1 oder 2, **dadurch gekennzeichnet, dass** der Befestigungsbereich (26) annähernd in der Fortsetzung der Achse des Führungsorgans angeordnet ist.

4. Bremssystem nach einem der Ansprüche 1 bis 3, **dadurch gekennzeichnet, dass** das Führungsorgan (14) und der erste Teil (10a) des Trägers auf beiden Seiten einer Ebene (P1), welche die Schwenkachse (A) enthält und durch den Befestigungsbereich (26) verläuft, angeordnet sind.

5. Bremssystem nach einem der Ansprüche 1 bis 4, **dadurch gekennzeichnet, dass** es eine Ruhestellung, in der der Schwenkkörper (16) in der Nähe des Führungsorgans angeordnet ist, sowie eine betätigte Stellung, in der der Schwenkkörper derart verschwenkt ist, dass er in Richtung des ersten Teils des Trägers (10) gebracht ist, aufweist.

6. Bremssystem nach Anspruch 5, **dadurch gekennzeichnet, dass** der Schwenkkörper (16) eine Aufnahme (32) aufweist, um den zweiten Teil (10b) des Trägers (10) aufzunehmen, wenn das Bremssystem sich in der Ruhestellung befindet.

7. Bremssystem nach Anspruch 5 oder 6, **dadurch gekennzeichnet, dass** in der Ruhestellung der Winkel (α), welcher zwischen einer durch den Befestigungsbereich verlaufenden und die Schwenkachse enthaltenden ersten Ebene (P1) und einer die Schwenkachse (A) und die Längsachse (X) des Griffes enthaltenden zweiten Ebene (P2) definiert ist, kleiner als 90°, vorzugsweise kleiner als 70° ist.

8. Bremssystem nach einem der Ansprüche 5 bis 7, **dadurch gekennzeichnet, dass** es ferner eine Rückstellfeder (34) umfasst, die zwischen dem Träger und dem Schwenkkörper angebracht ist und derart angeordnet ist, dass das Bremssystem in die Ruhestellung zurückgebracht wird, wenn der Betätigungshebel nicht betätigt wird.

9. Bremssystem nach einem der Ansprüche 1 bis 8, **dadurch gekennzeichnet, dass** der erste Teil (10a) des Trägers eine Befestigungsmanschette (12) umfasst, die dazu bestimmt ist, an der Lenkstange des Fahrzeugs befestigt zu werden.

10. Bremssystem nach Anspruch 9, **dadurch gekennzeichnet, dass** die Achse, entlang derer sich das Führungsorgan erstreckt, in dem durch die Befestigungsmanschette (12) definierten Raum verläuft.

11. Bremssystem nach einem der Ansprüche 1 bis 10, **dadurch gekennzeichnet, dass** der Bremsbetätigungshebel (18) gewölbt ist und gestaltet ist, um sich über die gesamte Länge des Griffes (P) zu erstrecken.

12. Bremssystem nach einem der Ansprüche 1 bis 11, **dadurch gekennzeichnet, dass** das Verhältnis zwischen:
• dem Abstand (L2) zwischen der Schwenkachse und dem Bremsbetätigungshebel (18), in einer Ebene senkrecht zu der Schwenkachse (A) betrachtet, und
• dem Abstand (L1) zwischen der Schwenkachse (A) und dem Befestigungsbereich, in der Ebene senkrecht zu der Schwenkachse (A) betrachtet,
über die gesamte Weite der Bewegung des Bremsbetätigungshebels konstant ist.

13. Radfahrzeug (200) mit wenigstens einem Rad (220), das an einem Rahmen befestigt ist, der einen Griff (P) und wenigstens eine Bremse (240), welche dem Rad zugeordnet und durch ein Bremsseil betätigbar ist, umfasst, wobei das Fahrzeug ferner ein Bremssystem (100) nach einem der Ansprüche 1 bis 12 umfasst.

14. Fahrzeug nach Anspruch 13, **dadurch gekennzeichnet, dass** die Schwenkachse (A) zu der Ebene (Q) des Rades im Wesentlichen senkrecht verläuft oder leicht geneigt ist.

15. Fahrzeug nach Anspruch 13 oder 14, **dadurch gekennzeichnet, dass** die Schwenkachse (A) oberhalb einer horizontalen Ebene (R), welche die Längsachse (X) des Griffes enthält, angeordnet ist.

16. Fahrzeug nach einem der Ansprüche 13 bis 15, **dadurch gekennzeichnet, dass** die Achse (Y), entlang derer sich das Führungsorgan erstreckt, in dem durch den Griff definierten Raum verläuft.

## Claims

1. A braking system (100) for a vehicle (200) having handlebars provided with at least one gripping handle (P) having a longitudinal axis (X), and at least one brake (240) that can be actuated by a brake cable (C), said braking system comprising:
• a support (10) having a first portion (10a) designed to be fastened to the handlebars and a second portion (10b) provided with a guide member (14) for the brake cable;
• a pivoting body (16) pivotably mounted relative to the support around a pivot axis (A) that is substantially parallel to the longitudinal axis (X) of the gripping handle (P) when the braking system is fastened to the handlebars; the pivoting body including:
∘ a brake lever (18) protruding, in a direction (B) substantially parallel to the pivot axis (A), from a first end (16a) of the pivoting body opposite the pivot axis; and
∘ a fastening area (26) for one end (Ca) of the brake cable (C),
∘ said fastening area being positioned between the pivot axis (A) and said first end of the body opposite the pivot axis, and in that the guide member (14) of the brake cable extends along an axis (Y) that passes into the volume defined by the first portion of the support designed to be fastened to the handlebars.

2. The braking system according to claim 1, **characterized in that** the support (10) has a bent portion (10c) situated between the first and second parts of the support, and **in that** the pivot axis (A) passes through the bent portion.

3. The braking system according to any one of claims 1 or 2, **characterized in that** the fastening area (26) is positioned approximately in the continuation of the axis of the guide member.

4. The braking system according to any one of claims 1 to 3, **characterized in that** the guide member (14) and the first part (10a) of the support are arranged on either side of a plane (P1) containing the pivot axis (A) and passing through the fastening area (26).

5. The braking system according to any one of claims 1 to 4, **characterized in that** it has an idle position in which the pivoting body (16) is positioned near the guide member, and an actuated position in which the pivoting body is pivoted so as to be brought toward the first part of the support (10).

6. The braking system according to claim 5, **characterized in that** the pivoting body (16) has a housing (32) for receiving the second part (10b) of the support (10) when said braking system is an idle position.

7. The braking system according to claim 5 or 6, **characterized in that**, in the idle position, the angle (α) defined between a first plane (P1) passing through the fastening area and containing the pivot axis and a second plane (P2) containing the pivot axis (A) and the longitudinal axis (X) of the gripping handle is preferably smaller than 90°, and preferably smaller than 70°.

8. The braking system according to any one of claims 5 to 7, **characterized in that** it also comprises a return spring (34) mounted between the support and the pivoting body. The spring is for example a torsion spring.

9. The braking system according to any one of claims 1 to 8, **characterized in that** the first part (10a) of the support comprises a fastening sleeve (12) designed to be fastened to the handlebars of the vehicle.

10. The braking system according to claim 9, **characterized in that** the axis along which the guide member extends passes into the volume defined by the fastening sleeve (12).

11. the braking system according to any one of claims 1 to 10, **characterized in that** the brake lever (18) is curved and is configured to extend over the entire length of the gripping handle (P).

12. The breaking system according to any one of claims 1 to 11, **characterized in that** the ratio between:
• the distance (L2) between the pivot axis and the brake lever (18), considered in a plane perpendicular to the pivot axis (A); and
• the distance (L1) between the pivot axis (A) and the fastening area, considered in said plane perpendicular to the pivot axis (A),
is constant over the entire amplitude of the movement of the brake lever.

13. A wheeled vehicle (200) having at least one wheel (220) fastened to a frame including a gripping handle (P) and at least one brake (240) associated with said wheel and that can be actuated by a brake cable, said vehicle also comprising a braking system (100) according to any one of claims 1 to 12.

14. The vehicle according to claim 13, **characterized in that** the pivot axis (A) is substantially perpendicular or slightly inclined relative to the plane (Q) of the wheel.

15. The vehicle according to claim 13 or 14, **characterized in that** the pivot axis (A) is positioned above a horizontal plane (R) containing the longitudinal axis (X) of the gripping handle.

16. The vehicle according to any one of claims 13 to 15, **characterized in that** the axis (Y) along which the guide member extends passes into the volume defined by the gripping handle.
